# EUROPEAN PATENT SPECIFICATION

(11) **EP 0 658 085 B1**
(45) Date of publication and mention of the grant of the patent: **08.05.1996**
(21) Application number: 92924584.3
(22) Date of filing: 20.11.1992
(51) Int. Cl.: A23J 1/02, A23K 1/10, A23L 1/311

(54) **POWDERED OR GRANULATED PROTEIN PRODUCT, PROCESS FOR THE PREPARATION THEREOF, AND FOODSTUFF CONTAINING THE PROTEIN PRODUCT**
PULVERFÖRMIGES ODER GRANULIERTES PROTEINPRODUKT, VERFAHREN ZU DESSEN HERSTELLUNG UND NAHRUNGSMITTEL, DAS DAS PROTEINPRODUKT ENTHÄLT
PRODUIT PROTEIQUE PULVERULENT OU GRANULE, SON PROCEDE DE PREPARATION, ET PRODUIT ALIMENTAIRE LE CONTENANT

(30) Priority: 21.11.1991 DK 1904/91
(43) Date of publication of application: 21.06.1995
(73) Proprietor: VIDEBAEK PROTEIN A/S, 6920 Videbaek (DK)
(72) Inventor: NISSEN, Steen, Ingolf, DK-7500 Holstebro (DK)
(74) Representative: Simonsen, Christian Rosendal
(86) International application number: DK9200345
(87) International publication number: WO9309679

(56) References cited:
- EP-A- 0 033 519
- WO-A-85/03415
- DE-A- 2 605 917
- US-A- 3 295 982
- US-A- 4 137 335
- US-A- 4 216 239

## Description

The present invention relates to a powdery or granular protein product, a process for the preparation thereof and foodstuff containing the protein product.

Animal fat tissue is a by-product in the cutting up of slaughtered animals, such as hogs and cows, and is in connection with the present invention preferably hog fat, leaf fat or ox fat tissue.

The fat tissue is comminuted or chopped into particles of a size from a few millimeters to a few centimeters, preferably to a particle size of from 2-10 mm, and subjected to a fat rendering process. The rendering results in a solid phase and a liquid consisting of two liquid phases. The two liquid phases may be separated in a fatty phase and an aqueous phase containing inorganic and organic components, in particular water-soluble proteins, including membrane proteins. The solid phase, which is neither soluble in fat nor water, consists for the major part of structured protein from the fat tissue, but also contains fat which has not yet entered the separated fat phase.

The aqueous proteinaceous phase is termed stick water, and the solid, water-insoluble protein phase is termed greaves in the present specification with claims, in accordance with commonly used terminology.

The fat phase, which is the main product from the rendering process, is not used in the present invention, and may be used for any other purpose.

For the rendering of fat tissue both direct and indirect heating may be used. At the direct heating it is preferred to introduce atmospheric aqueous vapour to the container holding the comminuted fat tissue. At the indirect heating the container holding the comminuted fat tissue is supplied with heat from the outside, and in order to avoid heat damage, for instance scorching of the fat tissue, it is preferred to boil the fat in water under reduced pressure.

The amount of stick water depends on the chosen heating method, as the boiling water or condensated water vapour contributes to the total amount.

In a fat rendering process, in which direct heating with water vapour is used, the resulting stick water has typically a dry solids content of approx. 4% by weight. The moist greaves have after a single fat rendering a fat content of 8-25% by weight, typically approx. 10%, in a well-functioning fat rendering process. These moist greaves may be subjected to an additional fat rendering process, where-after the fat content in the moist greave will typically be approx. 4% by weight.

The proteins contained in stick water are from a nutritional and functional point of view valuable compounds, but they have not until now been widely used. Thus, neither stick water nor its constituents are used today in the food industry. It is to some extent used within the forage industry, but in many places it constitutes an inconvenient waste product, which has to be discarded.

US Patent No. 3,295,982 discloses a method of using stick water by leading the amount of stick water resulting from the rendering back to the moist or dry greaves. The dry product attained by this method has a protein fraction originating from stick water corresponding to the amount, or less, resulting from the rendering. In the said US patent nothing is said about the intended use of the product, but it is to be supposed that it is a question of forage products.

It has now surprisingly turned out that by adding to the greaves a comparatively higher amount of proteins resulting from stick water than the amount contained in the fat tissue, from which the greaves originated, a protein product with good water-absorbent and emulsifying properties is attained.

The term "proteins originating from stick water" comprises apart from actual proteins like for instance albumins, globulins, and membrane proteins, also decomposition products thereof and other proteinlike amino acid-containing constituents.

Thus the present invention relates to a powdery or granular protein product comprising a protein fraction originating from a water-insoluble protein phase, termed greaves, resulting from rendering in one or more steps of animal fat tissue comminuted to a particle size of from a few millimeters to a few centimeters, and a protein fraction, termed stick water, resulting from an aqueous proteinaceous phase produced by rendering of animal fat tissue, said powdery or granular protein product being characteristic in that the amount of protein resulting from stick water in a given portion of the protein product is higher than the amount present in the stick water having been produced by rendering the amount of fat tissue resulting in the greaves present in the portion in question of the protein product.

The protein product has a vigorous, rich taste which, combined with the good water-absorbent and emulsifying properties, makes it valuable as an additive to foodstuff, in which such properties are desired along with a high nutritional value. Thus the protein product may be used in a large number of foodstuffs for the attainment of an improved quality in respect of taste and/or nutriment or a reduction of the price of the foodstuff.

Compared with the known product disclosed in US Patent No. 3,295,982, it contains a protein fraction originating from stick water corresponding to the amount, which is contained in the fat tissue, from which the greaves were produced, or less, the ratio between hydrophilic and liophilic properties is such that the product according to the invention is distributed better in media, where the aqueous phase is dominant, like in sausages, burgers, salami, soups, patés, and lean meat articles. The protein product according to the invention may therefore be used as a meat substitute in comparatively high amounts without badly affecting the properties of the finished article of food. The product according to the invention will typically absorb water in an amount corresponding to eight times its own weight, but the known product will hardly be able to absorb more water than approx. three times its own weight. Besides, the hydration of the product according to the invention will take place more quickly than in case of the known product. The good water-absorbent properties make the product in particular suited in foodstuff, where a low fat content is desired, for instance in so-called light-products, in which it may completely or partially be a substitute for fatty meat.

The protein product according to the invention has essentially the same protein and consequently the same amino acid composition as common in animal tissue, which is an advantage both from a nutritional as well as a marketing point of view.

In a preferred embodiment the protein product according to the invention contains preferably 5-50% by weight, preferably 20-40% by weight, protein originating from stick water calculated on the total dry solids content of the protein product. The fat content in the protein product depends on the rendering process, but typically amounts to from 1-25% by weight, preferably 5-15% by weight, by an effective rendering process. The moisture content of the protein product depends on the effectiveness of the drying, but the water content normally amounts to 2-8% by weight, preferably 3-5% by weight.

The protein fraction originating from greaves amounts to 20-95% by weight of the total dry solids content in the protein product, preferably 30-75% by weight. Besides, the product contains a smaller amount of organic or inorganic salts, which may be adjusted during the production to obtain a product with a desired taste.

The invention also relates to a process for the preparation of a powdery or granular protein product, in which a moist greave, resulting from rendering in one or more steps of animal fat tissue comminuted to a particle size of from a few millimeters to a few centimeters, is mixed with stick water, likewise resulting from rendering of fat tissue, whereafter the mixture is dried, said process being characteristic in that the stick water is concentrated prior to the mixing with the moist greaves, in that by the mixing a higher amount of stick water concentrate is added than the amount of stick water produced for the formation of the greaves, and in that the mixture of moist greaves and concentrated stick water is comminuted prior to, during or after the drying.

By the term "comminuted" is meant a process, by which a desired particle size is obtained. If the fat tissue prior to the rendering is cut or chopped in such a way that the protein product resulting from the drying has the desired particle size, this process is omitted.

The moist greave which takes part in the process according the invention results from rendering of fat tissue with such an intensity and possibly several times that it gets a fat content of 1-25% by weight, most preferably from 2-15% by weight, and a water content of between 60 and 80% by weight, preferably between 65 and 75% by weight.

The stick water is concentrated in any suitable way, for instance by ultra filtering and/or evaporation in one or more steps to a dry solids content of from 10-35% by weight, preferably from 25-35% by weight, perhaps in such a way that the first part of the concentration is carried out by ultra filtering, and the last part by evaporation. However, the preferred way of concentrating is to concentrate by evaporation under reduced pressure as the solely used way of concentration.

Stick water concentrated to a dry solids content of approx. 30% by weight is a paste-like product, and is in the following called stick water paste. The stick water paste melts by heating to a temperature of 28-30°C and then resumes a paste-like consistency by cooling to under the temperature mentioned above. It is therefore preferred to add the stick water paste to the moist greaves under heating to above the melting point of the stick water, preferably under heating to 50-70°C. Furthermore, it is preferred to perform the mixing by intensive mechanical stirring, where also a certain comminuting takes place to ensure a homogeneous distribution and an intimate contact between the moist greaves and the stick water paste.

By the process according to the invention such an amount of stick water paste is added to the moist greave that the dry powdery or granular protein product obtains a protein fraction originating from stick water of from 10-50% by weight, preferably 20-40% by weight, of the total dry solids content.

With a protein fraction originating from stick water of approx. 30% by weight in the end product, proteins originating from stick water are added in an amount corresponding 10 times to the amount formed by the rendering of the amount of fat tissue, which resulted in the protein fraction originating from greaves in the end product. Such a product will have very good water- and fat-absorbent properties, which greaves without proteins originating from stick water do not possess, or greaves with a small content of proteins originating from stick water, for instance approx. 3% by weight.

The drying and the comminuting may either be performed as an integrated process or as two subsequent processes in an arbitrary order. For instance the comminuting may be carried through first as a wet-grinding followed by drying in a fluidized bed or by drying by atomization for the formation of the end product. The stick water paste may also after the mixing with the moist greaves be subjected to drying in a furnace, possibly on a conveyor belt continuously running through the furnace, and then comminuted to an average particle size of 1-4 mm. This is the preferred method.

The application of the comparatively high amount of proteins originating from stick water to the moist greaves and the drying of this mixture is performed without any problems after a preceding concentration of the stick water. If the dry solids content in the stick water is small, for instance approx. 4% by weight, which is typical for unconcentrated stick water, a supply of the necessary amount of stick water will result in a mixture with so high a content of water that the drying is impeded or even made impossible, as tubes and other process apparatuses under the process conditions clog due to the strong adhesive properties of the stick water. The solution to a related problem has been proposed in US Patent No. 3,295,982 by adding first only a part of the stick water to the moist greaves, drying of the mixture and then recirculating the dried product and then adding stick water anew. Such a process would, however, be inconvenient in the preparation of the product according to the invention partly on account of costs for the necessary process equipment for the recirculation, partly on account of bigger energy costs due to the fact that the greave has to be heated for each recirculation, which would besides present a considerable risk of heat damage of the product.

The protein product according to the invention has when seen under micropscope a very porous coke-like structure as a consequence of a lenient, but quick drying, where the water contained in the protein product makes cells in the rendered fat tissue blow up. The hydrophilic proteins from stick water is deposited on the surface of the porous structure, while lipophilic proteins, for instance membrane proteins, are deposited in the centre, whereby partly a high water-absorbency and partly a good fat-absorbency is provided. As the protein product according to the invention thus possesses both fat- and water-absorbent properties, it is suitable as an emulsifier in mixed fat and aqueous environments, such as for instance forcemeat.

In Norwegian Publication No. 137,843 it has been proposed to use other types of structured protein, viz. rind protein as additive for foodstuff, but such a product will only be able to bind a small amount of water on account of the far less porous, solid structure with small or no porosity of the rind protein.

By contact with water the protein product will swell, and in meat products, of which the swelled protein is a part good appetizing qualities are obtained, such as a good structure and a good mouth feeling and a pleasant rich taste of meat.

If desired, the protein product according to the invention may contain lipophilic compounds, such as oleo resins extracted from among others pepper, without loosing its powdery nature and its water-absorbent property. This property may be used for the preparation of a spice, which may be used in the manufacture of for instance salami.

The invention also relates to a meat-containing foodstuff, which is characteristic in containing the protein product according to the invention in an amount of from 1-10% by weight, preferably 1-5% by weight, more preferably approx. 2% by weight.

Such a meat product may without appearing a product of inferior quality be manufactured with a meat content, which is approx. 5-6 times lower than the amount of protein product added, i.e. with a meat content, which is 8-12% lower than what would be usual, had the protein product according to the invention not been added. This gives partly a lower fat content in the finished goods and consequently a better nutritional quality, partly a better exploitation of valuable proteins in slaughter animals.

The powdery and granular protein product according to the invention may be sold as such, or it may be sold in ad-mixture with salt, nitrite, phosphate, spices or other compounds that are commonly used in foodstuff of that kind, for which the protein product is intended to be used.

The protein product is normally swelled, but not necessarily in water or salt-containing water, for the attainment of a protein gel, before it is added to the foodstuff.

The invention will be illustrated in detail by means of the following examples.

### Example 1

### Protein product extracted from hog lard.

Moist greaves are extracted by a continuous rendering process from hog fat comminuted into particles having a size of 2-10 mm, two rendering processes being used. The liquid phase is subjected to centrifuging for separation into a fat phase and a stick water phase. The resulting stick water had a protein content of 4% by weight, which by phase evaporation was concentrated to 30% by weight.

The stick water paste was heated to 60°C and moist greaves containing 30% by weight of dry solids were added continuously under heavy stirring in the ratio of 1:2. The resulting mixture was dried to a water content of 2-3% by weight on a conveyor belt, which was continuously running through a furnace.

The resulting product contained 30% by weight protein originating from stick water and had a composition corresponding to

| | |
|---|---|
| protein | 88% by weight |
| fat | 6-8% by weight |
| water | 2-3% by weight |
| salt | 2-4% by weight |

The protein part of the product had the following amino acid composition:

| | |
|---|---|
| Aspartic acid | 7.43% |
| Threonine | 3.15% |
| Serine | 4.15% |
| Glutamic acid | 11.60% |
| Proline | 8.23% |
| Glycine | 13.60% |
| Alanine | 7.38% |
| Valine | 4.46% |
| Isoleucine | 2.96% |
| Thyrosine | 2.40% |
| Phenyl alanine | 3.27% |
| Lysine | 5.71% |
| Histidine | 1.88% |
| Arginine | 7.65% |

### Example 2

The water-absorbency of the protein product prepared in Example 1 compared to a protein product containing a smaller part of protein originating from stick water.

The protein product prepared in Example 1 was ground to a particle size of less than 300 µm. 100 g water was added to 20 g of this powder at 20°C. After 10 minutes all the water had been absorbed, and the mixture stood as a thick porrage. The powdery protein product is thus able to absorb more than 5 times it own weight.

For comparison 20 g greaves containing 3% by weight of protein originating from stick water was pulverized to the same particle size as above and 100 g water was added. After 10 minutes it was ascertained that 30 g unabsorbed water was still present. This product is thus as a maximum able to absorb 3.5 times its own weight.

### Example 3

This example shows the ability of the powdery protein product of absorbing oleo resin in comparison with a commonly used meat substitute.

100 g protein product prepared like in Example 1 and 100 g rind protein were weighed out. The grinding of the two products was the same.

The weighed out products were transferred to a beaker and mixed with such an amount of oleo resin that there were significant signs of unabsorbed liquid. Then the protein products were transfered to a tared sieve, in which the free liquid dripped off for 10 minutes, and counterweighing was then performed.

The protein product according to Example 1 absorbed 55 g oleo resin, while the rind protein only absorbed 15 g.

### Example 4

The protein product was used as a meat substitute in the production of salamis with a low pH, i.e. between 4.7 and 5.3.

Prior to use the product was hydrated with water in the ratio of 1:3 for the formation of a solid product called protein gel. The other ingredients in the recipe were then added. The protein gel may be a substitute for lean meat in the ratio 1:1.
A typical recipe:

| | |
|---|---|
| Lean meat (25% fat) | 50% by weight |
| Fat tissue (80% fat) | 40% by weight |
| Various additives and salt | 10% by weight |

Part of the lean meat may be replaced by protein gel.
The recipe is then:

| | |
|---|---|
| Lean meat (25% fat) | 42% by weight |
| Protein gel | 8% by weight |
| Fat tissue (80% fat) | 40% by weight |
| Various additives and salt | 10% by weight |

In the first recipe the fat content in the finished article is 44.5%, while in the recipe with the protein gel it is 42.5%.

The salami containing the protein gel had the same consistency as the salami without protein gel, and the two salamis had essentially the same taste.

If it is desired to reduce the fat content, protein gels may be used as a replacement for fat instead of meat.

The fat content may be further reduced by replacing 5-10% of the fat part by protein gel.

### Example 5

Preparation of Frankfurt sausages with a low fat content.
A typical Danish recipe is:

| | |
|---|---|
| Lean meat (25% fat) | 19% by weight |
| Fat meat (35% fat) | 10% by weight |
| Cuttings (50% fat) | 10% by weight |
| Soft fat tissue (75% fat) | 20% by weight |
| Machine-cut meat (25% fat) | 6% by weight |
| Water | 25% by weight |
| Flour | 5% by weight |
| Soy isolate | 2% by weight |
| Salt and spices | 3% byweight |

The protein product was hydrated in the ratio of 1:5 with water, whereafter the other ingredients were added. The protein gel may completely replace the fat meat, the recipe then being:

| | |
|---|---|
| Lean meat (25% fat) | 19% by weight |
| Protein gel | 10% by weight |
| Cuttings (50% fat) | 10% by weight |
| Soft fat tissue (75% fat) | 20% by weight |
| Machine-cut meat (25% fat) | 6% by weight |
| Water | 25% by weight |
| Flour | 5% by weight |
| Soy isolate | 2% by weight |
| Salt and spices | 3% by weight |

In the first recipe the fat content in the finished article is 30%, while in the recipe with the protein gel it is 26%.

### Example 6

### Use of the protein product hydrated in the ratio of 1:8 for the preparation of liver paste

A hot emulsion was made by mixing 1 kg protein product prepared according to Example 1 with 2.0 kg soup, 5 kg minced boiled fat, 5.0 kg minced, scalded liver and 0.3 kg onions and spices at 75°C.

The forcemeat was poured into 500 ml aluminium foil trays and baked. After cooling, the resulting liver paste had a satisfactory consistency.

## Claims

1. A powdery or granular protein product comprising a protein fraction originating from a water-insoluble protein phase, termed greaves, resulting from rendering in one or more steps of animal fat tissue comminuted to a particle size of from a few millimeters to a few centimeters, and a protein fraction, termed stick water, resulting from an aqueous proteinaceous phase produced by rendering of animal fat tissue,
**characterized** in that the amount of protein resulting from stick water in a given portion of the protein product is higher than the amount present in the stick water having been produced by rendering the amount of fat tissue resulting in the greaves present in the portion in question of the protein product, the protein fraction originating from stick water amounting to from 5- 50% by weight of the total content of solids in the protein product.

2. A protein product according to claim 1,
**characterized** in that the animal fat tissue is hog fat, leaf fat or ox fat tissue and in that the fat tissue is cut up into a particle size of from 2-10 mm.

3. A protein product according to claim 1 or 2,
**characterized** in that the protein fraction originating from stick water amounts to from 20-40% by weight, of the total content of solids in the protein product.

4. A protein product according to claims 1-3,
**characterized** in having a protein content originating from stick water of 5-30% by weight of the total content of solids in the protein product.

5. A process for the preparation of a powdery or granular protein product according to any of the claims 1-4, in which a moist, water-insoluble protein phase, termed greaves, resulting from rendering in one or more steps of animal fat tissue comminuted to a particle size of from a few millimeters to a few centimeters, is mixed with an aqueous proteinaceous phase, termed stick water, likewise resulting from rendering of fat tissue, whereafter the mixture is dried,
**characterized** in that the stick water is concentrated prior to the mixing with the moist greaves, in that by the mixing a higher amount of stick water concentrate is added than the amount of stick water produced for the formation of the greaves, and in that the mixture of moist greaves and concentrated stick water is comminuted prior to, during or after the drying.

6. A process according to claim 5,
**characterized** in that the stick water is concentrated to a dry solids content of from 10-35% by weight, preferably from 25-35% by weight, by evaporation and/or ultra filtering, preferaby by evaporation under reduced pressure.

7. A process according to claim 5,
**characterized** in that such an amount of concentrated stick water is added to the moist greaves that the protein fraction originating from stick water in the end product amounts to 10-50% by weight, preferably from 20-40% by weight of the total dry solids content.

8. A process according to claim 5,
**characterized** in that such an amount of concentrated stick water is added to the moist solid greaves that the protein fraction originating from stick water in the end product amounts to from 5-30% by weight of the total dry solids content.

9. A process according to claims 5, 6, or 7,
**characterized** in that the mixture of moist greaves and concentrated stick water is dried on a conveyor belt in a furnace and then comminuted to an average particle size of 1-4 mm.

10. A foodstuff, **characterized** in containing a protein product according to claims 1-4 in an amount of 1-10% by weight, preferably 1-5% by weight, more preferably approx. 2% by weight.

## Patentansprüche

1. Pulverförmiges oder granuliertes Proteinprodukt mit einem Proteinanteil, der von einer wasserunlöslichen Proteinphase, genannt Grieben, stammt, die durch Schmelzen von zerkleinertem tierischen Fettgewebe mit einer Teilchengrösse von einigen Millimetern bis wenigen Zentimetern in einer oder mehreren Stufen entsteht, sowie einem Proteinanteil, genannt Leimwasser, das von einer durch Schmelzen von tierischem Fettgewebe entstandenen wässrigen Proteinphase stammt, dadurch **gekennzeichnet,** dass die Menge des von Leim-wasser stammenden Proteins in einer gegebenen Portion des Proteinproduktes grösser ist als die Menge von Pro-tein in dem durch Schmelzen der Menge Fettgewebe entstandenen Leimwasser, das in der entsprechenden Portion des Proteinproduktes die vorhandenen Grieben ergibt, wobei der von Leimwasser stammende Proteinanteil von 5-50 Gew.-% des gesamten Feststoffgehalts in dem Proteinprodukt beträgt.

2. Proteinprodukt nach Anspruch 1, dadurch **gekennzeichnet,** dass das tierische Fettgewebe Schweine-, Flomen- oder Rinderfettgewebe ist, und dass das Fettgewebe auf eine Teilchengrösse von 2-10 mm zerkleinert ist.

3. Porteinprodukt nach Anspruch 1 oder 2, dadurch **gekennzeichnet,** dass der von Leimwasser stammende Proteinanteil 20-40 Gew.-% des gesamten Feststoffgehalts im Proteinprodukt beträgt.

4. Proteinprodukt nach Anspruch 1-3, **gekennzeichnet** durch einen von Leimwasser stammenden Proteingehalt von 4-30 Gew.-% des gesamten Feststoffgehalts im Proteinprodukt.

5. Verfahren zur Herstellung eines pulverförmigen oder granulierten Proteinproduktes nach einem der Ansprüche 1-4, bei welchem Verfahren eine feuchte, wasserunlösliche Proteinphase, genannt Grieben, die durch Schmelzen von zerkleinertem tierischen Gewebe mit einer Teilchengrösse von einigen Millimetern bis wenigen Zentimetern in einer oder mehreren Stufen entsteht, mit einer wässrigen Proteinphase, genannt Leimwasser, das gleichfalls durch Schmelzen von Fettgewebe entsteht, gemischt wird, wonach das Gemisch getrocknet wird, dadurch **gekennzeichnet,** dass das Leimwasser vor dem Mischen mit den feuchten Grieben konzentriert wird, dass beim Mischen eine grössere Menge von Leimwasserkonzentrat als der zur Bildung der Grieben entstandenen Menge Leimwasser hinzugefügt wird, und dass das Gemisch von feuchten Grieben und konzentriertem Leimwasser vor dem Trocknen, während des Trocknens oder nach dem Trocknen zerkleinert wird.

6. Verfahren nach Anspruch 5, dadurch **gekennzeichnet,** dass das Leimwasser auf einen Trockenstoffgehalt von 10-35 Gew.-%, vorzugsweise 25-35 Gew.-%, durch Verdampfen und/oder Ultrafiltrierung, vorzugsweise durch Verdampfen under reduziertem Druck, konzentriert wird.

7. Verfahren nach Anspruch 5, dadurch **gekennzeichnet,** dass zu den feuchten Grieben eine solche Menge von konzentriertem Leimwasser hinzugefügt wird, dass der von Leimwasser stammende Proteinanteil im Endprodukt 10-50 Gew.-%, vorzugsweise 20-40 Gew.-%, des gesamten Trockenstoffgehalts beträgt.

8. Verfahren nach Anspruch 5, dadurch **gekennzeichnet,** dass zu den feuchten Grieben eine solche Menge von konzentriertem Leimwasser hinzugefügt wird, dass der von Leimwasser stammende Proteinanteil im Endprodukt 5-30 Gew.-% des gesamten Trockenstoffgehalts beträgt.

9. Verfahren nach Anspruch 5, 6 oder 7, dadurch **gekennzeichnet,** dass das Gemisch von feuchten Grieben und konzentriertem Leimwasser auf einem Förderband in einem Ofen getrocknet und anschliessend auf eine durchschnittliche Teilchengrösse von 1-4 mm zerkleinert wird.

10. Nahrungsmittel, dadurch **gekennzeichnet,** dass es ein Proteinprodukt nach den Ansprüchen 1-4 in einer Menge von 1-10 Gew.-%, vorzugsweise 1-5 Gew.-%, am besten etwa 2 Gew.-% enthält.

## Revendications

1. Produit protéique pulvérulent ou granulé comprenant une fraction protéique provenant d'une phase protéique insoluble à l'eau, dite rillons, résultant de la fusion en une ou plusieurs étapes de tissus animaux gras réduits en particules d'une taille allant de quelques millimètres à quelques centimètres, et d'une fraction protéique, dite eau de colle, résultant d'une phase protéinée aqueuse produite par fusion de tissus animaux gras,
**caractérisé** en ce que la quantité de protéine résultant de l'eau de colle dans une portion donnée du produit protéique est supérieure à la quantité présente dans l'eau de colle ayant été produite par fusion de la quantité de tissus gras résultant en rillons présents dans la portion en question de produit protéique, la fraction protéique originaire de l'eau de colle allant de 5 à 50% en poids du contenu total de solides dans le produit protéique.

2. Produit protéique selon la revendication 1, **caractérisé** en ce que les tissus animaux gras sont de la graisse de porc, de la panne ou de la graisse de boeuf, et en ce que les tissus sont découpé en morceaux d'une taille de 2 à 10 mm.

3. Produit protéique selon les revendications 1 ou 2, **caractérisé** en ce que la fraction protéique originaire de l'eau de colle se monte à 20 à 40% en poids du contenu total de solides dans le produit protéique.

4. Produit protéique selon les revendications 1 à 3, **caractérisé** en ce qu'il présente un contenu en protéine originaire de l'eau de colle allant de 5 à 30% en poids du contenu total de solides dans le produit protéique.

5. Procédé de préparation d'un produit protéique pulvérulent ou granulé selon l'une quelconque des revendications 1 à 4, procédé dans lequel une phase protéique humide, insoluble à l'eau, dite rillons, résultant de la fusion en une ou plusieurs étapes de tissus animaux gras réduits en particules d'une taille allant de quelques millimètres à quelques centimètres, est mélangée avec une phase protéique aqueuse, dite eau de colle, résultant, elle aussi, de la fusion de tissus gras, ledit mélange étant ensuite séché,
**caractérisé** en ce l'eau de colle est concentrée avant mélange avec les rillons humides, en ce que lors du mélange, on ajoute une quantité d'eau de colle concentrée plus importante que la quantité d'eau de colle produite pour la formation des rillons, et en ce que le mélange de rillons humides et d'eau de colle concentrée est réduit en particules avant, durant ou après le séchage.

6. Procédé selon la revendication 5, **caractérisé** en ce que l'eau de colle est concentrée jusqu'à un contenu en solides allant de 10 à 35% en poids, de préférence 25 à 35% en poids, par évaporation et/ou ultrafiltration, de préférence par évaporation sous pression réduite.

7. Procédé selon la revendication 5, **caractérisé** en ce que l'on ajoute aux rillons humides une quantité d'eau de colle concentrée telle que la fraction protéique originaire de l'eau de colle se présente, dans le produit final, sous une quantité allant de 10 à 50% en poids, de préférence 20 à 40% en poids du contenu total de solides secs.

8. Procédé selon la revendication 5, **caractérisé** en ce que l'on ajoute aux rillons humides solides une quantité d'eau de colle concentrée telle que la fraction protéique originaire de l'eau de colle se présente, dans le produit final, sous une quantité allant de 5 à 30% en poids du contenu total de solides secs.

9. Procédé selon les revendications 5, 6 ou 7, **caractérisé** en ce que le mélange de rillons humides et d'eau de colle concentrée est séché sur un tapis convoyeur dans un four et ensuite réduit en particules d'une taille moyenne allant de 1 à 4 mm.

10. Produit alimentaire, **caractérisé** en ce qu'il contient un produit protéique selon les revendications 1 à 4, sous une quantité allant de 1 à 10% en poids, de préférence 1 à 5% en poids, et plus préférentiellement environ 2% en poids.
